# EUROPÄISCHE PATENTSCHRIFT

(11) **EP 0 616 764 B1**
(45) Veröffentlichungstag und Bekanntmachung des Hinweises auf die Patenterteilung: **18.10.1995**
(21) Anmeldenummer: 94250043.0
(22) Anmeldetag: 23.02.1994
(51) Int. Cl.: A01K 27/00

(54) **Auf- bzw. abrollbare Tierleine**
Retractable dogleash
Laisse escamotable pour chiens

(30) Priorität: 24.03.1993 DE 9304693 U
(43) Veröffentlichungstag der Anmeldung: 28.09.1994
(73) Patentinhaber: BOGDAHN TECHNIK GmbH, D-22941 Bargteheide (DE)
(72) Erfinder: Bogdahn, Manfred, D-22397 Hamburg (DE)
(74) Vertreter: Patentanwälte Wenzel & Kalkoff

(56) Entgegenhaltungen:
- EP-A- 0 464 725

## Beschreibung

Die Erfindung betrifft eine auf- bzw. abrollbare Leine zum Führen von Tieren, wobei die Leine in einem von einer Hand trag- und führbaren Gehäuse angeordnet ist, das eine von der gleichen Hand betätigbare Bremse zum Stoppen des sich außerhalb des Gehäuse befindenden Leinenabschnittes in einer jeweils gewünschten Länge umfaßt, und der Leine im Bereich der Bremse ein Dauerstopp-Schalter zum Arretieren der Leine in der von der Bremse momentan festgelegten Position zugeordnet ist und der Dauerstopp-Schalter von einer Betätigungseinrichtung der Bremse getrennt angeordnete Bedienungsmittel umfaßt.

Bei einer in der Praxis bekannten Bauart ähnlicher Tierleinen sitzt der Dauerstopp-Schalter unmittelbar an bzw. in einer Betätigungseinrichtung für die Bremse. Diese Anordnung ist hinsichtlich ihrer Handhabung sehr bedienungsfreundlich, jedoch können aufgrund der Kombination von Bremse und Stopper in einem Schalter Fehlschaltungen nicht mit Sicherheit vermieden werden. Dies gilt insbesondere dann, wenn ausgeführte Tiere, in der Regel Hunde, überraschend und blitzartig auf Umwelteinflüsse reagieren, so daß der Benutzer der Tierleine nicht selten allein aus diesem Grund die Übersicht verliert und demzufolge die Tierleine nicht mehr mit der erforderlichen Sicherheit bedienen kann.

Zur Schaffung einer höheren Bedienungssicherheit sind daher Tierleinen bekanntgeworden, bei denen die Betätigungseinrichtung für die Bremse von den Bedienungsmitteln für den Dauerstopp-Schalter getrennt am Gehäuse angeordnet ist. Dazu ist der Dauerstopp-Schalter als verschiebbarer, mit seinen Enden aus dem Gehäuse ragender Stift ausgebildet, wobei ein Stiftende als Bedienungsmittel zur Arretierung der Bremse an einer der Seiten des Gehäuses und das andere Stiftende als Bedienungsmittel zum Freigeben der Bremse an der anderen Seite des Gehäuses angeordnet sind. Der Stift umfaßt weiterhin Mittel, die zur Erreichung der Dauerstopp-Funktion die betätigte Bremse formschlüssig verriegeln. Eine solche Hundeleine ist bekannt vom Dokument EP-A-464725. Nachteilig bei solchen Tierleinen ist, daß das Erreichen der Dauerstopp-Funktion durch Einwirkung auf das entsprechende Stiftende des Dauerstopp-Schalters entweder nur von der linken oder nur von der rechten Hand, je nach Ausbildung der Tierleine bzw. dessen Gehäuses, erfolgen kann. Genauso verhält es sich mit dem Auflösen der Dauerstopp-Funktion. Somit ist es in der Praxis denkbar, daß der Benutzer einer solchen Tierleine diese mit der linken Hand führt, obwohl die Bedienungsmittel zum Erreichen der Dauerstopp-Funktion so angeordnet sind, daß sie nur dann sicher und schnell mit der Hand, die die Tierleine führt, erreicht werden können, wenn sich die Tierleine in der rechten Hand befindet. Selbstverständlich ist auch eine umgekehrte Konstellation denkbar. Im praktischen Gebrauch ist es jedoch nicht immer möglich, die Tierleine nur mit einer bestimmten Hand zu führen bzw. zu handhaben, so daß sie im Notfall möglicherweise erst in die andere Hand gewechselt werden muß und somit unnötig Zeit verloren gehen kann.

Der Erfindung liegt demgegenüber die Aufgabe zugrunde, eine Tierleine der eingangs genannten Art zu schaffen, die beliebig in jeder Hand geführt werden kann und bei der die Bedienungsmittel für den Dauerstopp-Schalter schnell mit der die Tierleine führenden Hand bzw. deren Fingern erreicht werden können.

Diese Aufgabe wird bei einer Tierleine der eingangs genannten Art dadurch gelöst, daß die Bedienungsmittel an mindestens zwei im Zugänglichkeitsbereich der das Gehäuse führenden Hand liegenden Bereichen des Gehäuses angeordnet sind, wobei durch wahlweise Betätigung jeweils nur eines der Bedienungsmittel die gewünschte Funktion des Dauerstopp-Schalters erreichbar ist. Somit ist neben der Erfüllung der Aufgabe eine Tierleine geschaffen, die im Bedarfsfall durch die ergonomische Anordnung der erforderlichen Bedienungsmittel eine schnelles und sicheres Reagieren auf bestimmte Überraschungssituationen des ausgeführten Tieres ermöglicht, d.h. eine Betätigung des Dauerstopp-Schalters ist immer und sofort von der das Gehäuse führenden Hand möglich.

Vorteilhafterweise können die Bedienungsmittel als einander gegenüberliegende, über eine das Gehäuse durchgreifende Welle miteinander wirkverbundene Schwenkhebel ausgebildet sein. Solche Schwenkhebel sind besonders leicht zu bedienen, preiswert zu fertigen und einfach innerhalb eines Gehäuses für eine Tierleine zu integrieren. Sie zeichnen sich weiterhin durch eine weitgehend allen möglichen Situationen gerecht werdende Robustheit aus.

Eine sichere Dauerstopp-Funktion der Bremse läßt sich dadurch erreichen, daß die Welle mit der Bremse wirkverbunden ist, wobei nach Betätigung der Bremse diese nach entsprechender Betätigung eines der Schwenkhebel durch die Welle formschlüssig verriegelbar ist. Somit ist eine stabile Arretierung der Bremse gegeben. Diese wird besonders schnell dadurch erreicht, daß die formschlüssige Verriegelung von Bremse und Welle durch eine Schwenk- bzw. Drehbewegung letzterer erfolgt, wobei eine für den Durchtritt eines Noppens der Bremse vorgesehene Ausnehmung der Welle aus dem Bereich des Noppens gelangt und der äußere Umfang der Welle den Noppen und damit die Bremse verriegelt.

Um einen fertigungs- und montagegünstigen Dauerstopp-Schalter zu erhalten, kann ein erster Schwenkhebel Bestandteile der Welle, also einstückig mit ihr verbunden sein, während der zweite Schwenkhebel mit dem freien Ende der Welle verbindbar ist. Diese Verbindung zwischen dem freien Ende der Welle und dem vereinzelten Schwenkhebel kann vorteilhafterweise schnappartig erfolgen.

Zur Vermeidung einer unbeabsichtigten Arretierung der Bremse kann die Welle ein Federelement umfassen, das den Dauerstopp-Schalter in den jeweiligen Endposition innerhalb des Gehäuses hält, so daß eine Verschwenkung der Welle nur über bewußte Einwirkung auf einen der Schwenkhebel erfolgen kann.

Bei einer weiteren vorteilhaften Ausführungsform eines Dauerstopp-Schalters können die Bedienungsmittel als Kippschalter ausgebildet sein, wobei zur Arretierung der Bremse nasenartige Elemente der Kippschalter in Ausnehmungen der Bremse formschlüssig eingreifen können. Die Kippschalter können über formschlußartig ineinandergreifbare Elemente, vorzugsweise über Zahnradsegmente, miteinander wirkverbunden sein.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigen
- Fig. 1: eine Seitenansicht einer mit einem Gehäuse versehenen erfindungsgemäßen Tierleine,
- Fig. 2: Darstellungen der Bauteile eines Schwenkhebels mit Welle für eine Tierleine nach Fig. 1
- Fig. 3: eine Prinzip-Darstellung des Zusammenwirkens von Bedienungsmittel des Dauerstopp-Schalters und Bremse in ausschnittweiser Wiedergabe der Tierleine der Fig. 1 und
- Fig. 4: eine abgewandelte Ausführungsform eines Dauerstopp-Schalters.

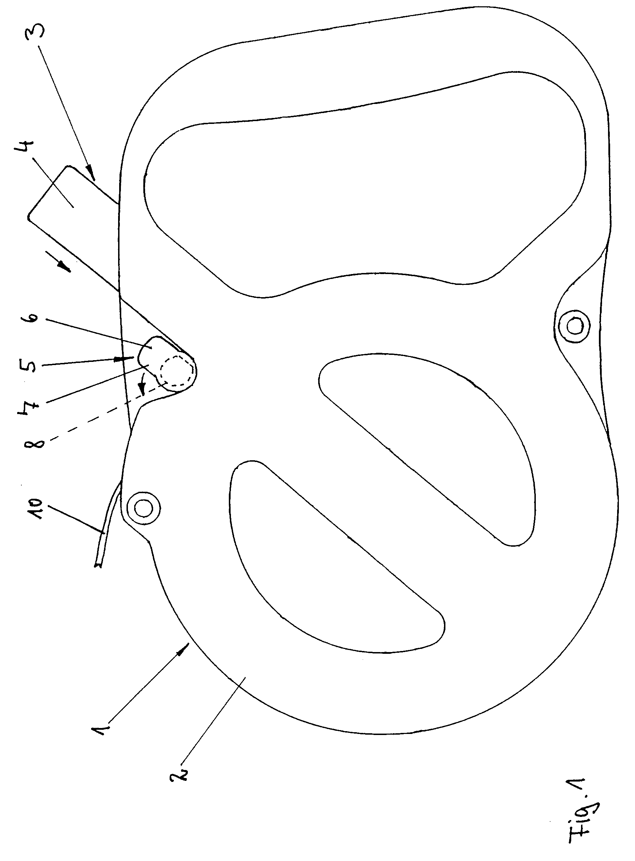

Eine in Fig. 1 gezeigte Tierleine 1 umfaßt ein Gehäuse 2, in dem eine Leine 10 auf- bzw. abrollbar gelagert ist, wobei ein aus dem Gehäuse ragendes freies Ende der Leine 10 mit dem auszuführenden Tier verbunden wird. Mit der die Leine 10 aufnehmenden, nicht dargestellten Vorrichtung ist eine Bremse 3 wirkverbunden, deren Betätigungseinrichtung 4 aus dem Gehäuse 2 herausragt. Aufbau und Funktion der Tierleine 1 mit Gehäuse 2 und Bremse 3 sind allgemein bekannt und müssen im Rahmen dieser Erfindung nicht näher erläutert werden. Im unmittelbaren Betätigungsbereich der Bremse 3 ist ein Dauerstopp-Schalter 5 angeordnet, der nach Einwirken auf die Betätigungseinrichtung 4 der Bremse 3 zum Zwecke des Abbremsens des Leinenauslaufs aus dem Gehäuse 2 betätigt werden kann, so daß für die jeweils gewünschte Dauer ein freies Leinenende konstanter Länge erreicht werden kann. Der erfindungsgemäße Dauerstopp-Schalter 5 ist an beiden Seiten des Gehäuses 2 angeordnet, indem eine das Gehäuse 2 durchgreifende Welle 8 an ihren Enden mit als Bedienungsmittel 6 fungierenden Schwenkhebeln 7 wirkverbunden ist. Der Dauerstopp-Schalter 5 kann über die Schwenkhebel 7 mit einem Finger der Hand, die das Gehäuse 2 führt, betätigt werden. Dabei spielt es keine Rolle, ob das Gehäuse 2 von der linken oder der rechten Hand geführt wird, da die Schwenkhebel 7 an beiden Seiten des Gehäuses 2 angeordnet sind.

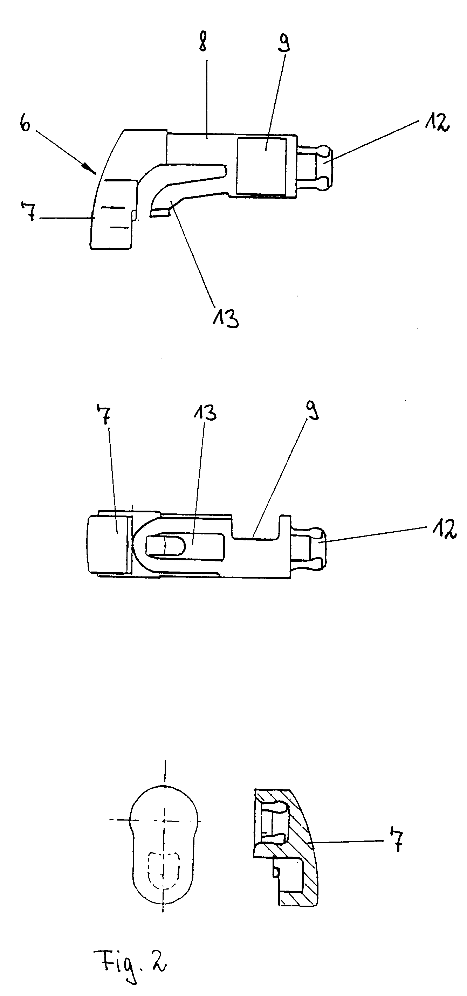

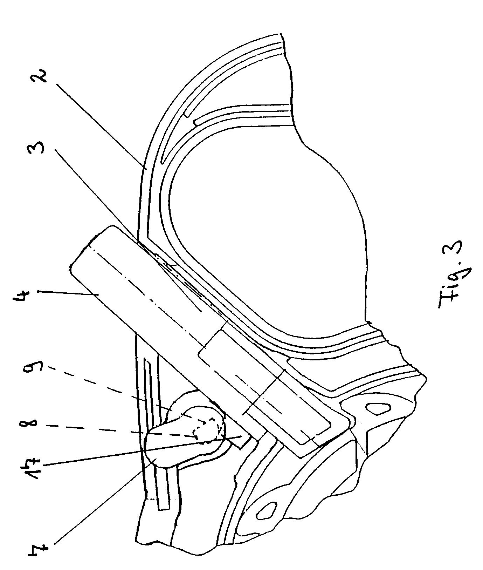

Der Dauerstopp-Schalter 5 entsprechend Fig. 2 umfaßt eine Welle 8, mit der einstückig einer der Schwenkhebel 7 verbunden ist. Das andere freie Ende der Welle 8 weist einen Zapfen 12 auf, über den der zweite Schwenkhebel 7 eingerastet wird. In der Welle 8 ist eine Ausnehmung 9 vorgesehen, die einem Noppen 17 der Betätigungseinrichtung 4 der Bremse 4 freien Durchtritt ermöglicht, so daß der Noppen 17 bei der Betätigung der Bremse 3 aus der die Leine 10 nicht sperrenden Position durch die Welle quasi hindurchgleiten kann, um in eine Sperrfunktion entsprechend Fig. 3 zu gelangen. Wenn man die Leine 10 nicht nur momentan in der jeweils ausgelaufenen Länge sperren, sondern eine Dauerstopp-Funktion erreichen will, wird einer der Schwenkhebel 7, wobei sich zwangsläufig der andere Schwenkhebel 7 mitbewegt, d.h. geschleppt wird, in die in Fig. 3 geschwenkte Position gebracht. Dabei dreht sich der äußere Umfang der Welle 8 in den Bereich des Noppens 17 und arretiert die Bremse 3 in ihrer Sperrfunktion. Wird einer der Schwenkhebel 7, und damit der andere zwangsläufig auch, in die ursprüngliche Lage zurückgeschwenkt, kommt die Ausnehmung wieder in den Bereich des Noppens 17, und eine nicht dargestellte Feder drückt die Bremse 3 einschließlich ihrer Betätigungseinrichtung 4 wieder in die ursprüngliche, weiter aus dem Gehäuse 2 ragende Position. Die Anordnung einer solchen Feder ist ebenfalls allgemein bekannt und muß demzufolge hier nicht näher erläutert werden.

Zusätzlich ist an der Welle 8 ein Federelement 13 angeordnet, das im entsperrten Zustand der Leine 10 entsprechend Fig. 1 in eine nicht dargestellte Ausnehmung des Gehäuses 2 einrastet, so daß ohne Einwirkung auf die Schwenkhebel 7 diese immer in der die Bremse 3 freibeweglich lassenden Position arretiert sind.

Der Vorteil des erfindungsgemäßen Dauerstopp-Schalters 5 besteht in seiner beidhändigen Bedienbarkeit, unabhängig davon, ob das Gehäuse 2 in der linken oder rechten Hand geführt wird. Dabei ist eine Fehlschaltung durch Irritationen bei z.B. überraschenden Aktionen des geführten Tieres weitestgehend ausgeschlossen.

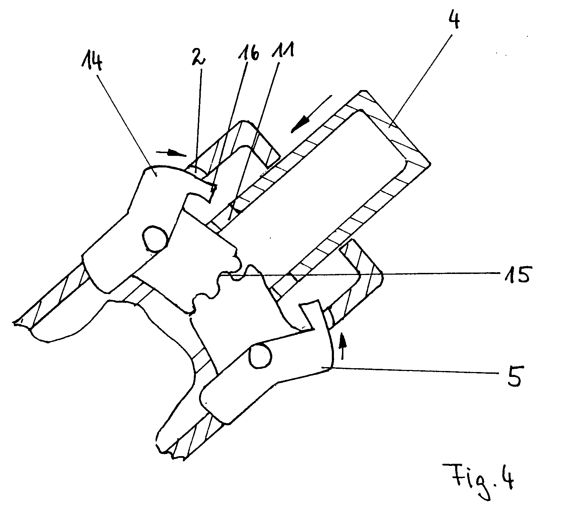

Fig. 4 zeigt eine weitere, mögliche Ausführungsform eines erfindungsgemäßen Dauerstopp-Schalters 5. In dieser Ausführungsform besteht der Dauerstopp-Schalter 5 aus zwei zueinander verschwenkbaren Kippschaltern 14, die über Zahnradsegmente 15 zueinander zwangsgeführt wirkverbunden sind, so daß bei Betätigung eines dieser Kippschalter 14 der andere zwangsläufig mitbewegt wird. An den Kippschaltern 14 befinden sich hakenartige Elemente 16, die bei Betätigung formschlüssig in Ausnehmungen 11 der Bremse 3 einrasten und diese somit verriegeln.

### Bezugszeichenliste:

- 1: Tierleine
- 2: Gehäuse
- 3: Bremse
- 4: Betätigungseinrichtung
- 5: Dauerstopp-Schalter
- 6: Bedienungsmittel
- 7: Schwenkhebel
- 8: Welle
- 9: Ausnehmung
- 10: Leine
- 11: Bremsen-Ausnehmungen
- 12: Zapfen
- 13: Federelement
- 14: Kippschalter
- 15: Zahnradsegment
- 16: hakenartiges Element
- 17: Noppen

## Patentansprüche

1. Auf- bzw. abrollbare Leine zum Führen von Tieren, wobei die Leine (10) in einem von einer Hand trag- und führbaren Gehäuse (2) angeordnet ist, das eine von der gleichen Hand betätigbare Bremse (3) zum Stoppen des sich außerhalb des Gehäuse befindenden Leinenabschnittes in einer jeweils gewünschten Länge umfaßt, der Leine (10) im Bereich der Bremse ein Dauerstopp-Schalter (5) zum Arretieren der Leine in der von der Bremse (3) momentan festgelegten Position zugeordnet ist und der Dauerstopp-Schalter (5) von einer Betätigungseinrichtung (4) der Bremse (3) getrennt angeordnete Bedienungsmittel (6) umfaßt, **dadurch gekennzeichnet**, daß die Bedienungsmittel (6) an mindestens zwei im Zugänglichkeitsbereich der das Gehäuse (2) führenden Hand liegenden Bereichen des Gehäuses (2) angeordnet sind, wobei durch wahlweise Betätigung jeweils nur eines der Bedienungsmittel (6) die gewünschte Funktion des Dauerstopp-Schalters (5) erreichbar ist.

2. Tierleine nach Anspruch 1, **dadurch gekennzeichnet**, daß die Bedienungsmittel (6) als einander gegenüberliegende, über eine das Gehäuse (2) durchgreifende Welle (8) miteinander wirkverbundene Schwenkhebel (7) ausgebildet sind.

3. Tierleine nach Anspruch 1 oder 2, **dadurch gekennzeichnet**, daß die Welle (8) mit der Bremse (3) wirkverbunden ist, wobei nach Betätigung der Bremse (3) diese nach entsprechender Einwirkung auf einen der Schwenkhebel (7) durch die Welle (8) formschlüssig verriegelbar ist.

4. Tierleine nach Anspruch 3, **dadurch gekennzeichnet**, daß die formschlüssige Verriegelung von Bremse (3) und Welle (8) durch eine Schwenk- bzw. Drehbewegung der Welle (8) erfolgt, wobei eine für den Durchtritt eines Noppens (17) der Bremse (3) vorgesehene Ausnehmung (9) der Welle (8) aus dem Bereich des Noppens (17) gelangt und die Welle (8) den Noppen (17) verriegelt.

5. Tierleine nach einem der Ansprüche 2 bis 4, **dadurch gekennzeichnet**, daß ein erster Schwenkhebel (7) Bestandteil der Welle (8) ist, während der zweite Schwenkhebel (7) mit dem freien Ende der Welle (8) verbindbar ist.

6. Tierleine nach Anspruch 6, **dadurch gekennzeichnet**, daß die Verbindung zwischen dem freien Ende der Welle (8) und dem zweiten Schwenkhebel (7) schnappartig ausgebildet ist.

7. Tierleine nach einem der Ansprüche 2 bis 6, **dadurch gekennzeichnet**, daß die Welle (8) ein Federelement (13) umfaßt, das den Dauerstopp-Schalter (5) in der jeweiligen Endposition hält.

8. Tierleine nach Anspruch 1, **dadurch gekennzeichnet**, daß die Bedienungsmittel (6) des Dauerstopp-Schalters (5) als Kippschalter (14) ausgebildet sind, wobei zur Arretierung der Bremse (3) nasenartige Elemente (16) der Kippschalter (14) in Ausnehmungen (11) der Bremse (3) formschlüssig eingreifen.

9. Tierleine nach Anspruch 8, **dadurch gekennzeichnet**, daß die Kippschalter (14) über formschlußartig ineinandergreifbare Elemente miteinander wirkverbunden sind.

10. Tierleine nach Anspruch 8 oder 9, **dadurch gekennzeichnet**, daß die Kippschalter (14) über Zahnradsegmente (15) miteinander wirkverbunden sind.

## Claims

1. Windable and unwindable leash for leading animals, the leash (10) being arranged in a housing which can be held in, and guided by, a hand, the housing comprising a brake (3) which may be operated by said same hand to stop the portion of the leash located outside the housing at a desired length, a permanent stop-switch (5) for stopping the leash in the position momentarily determined by the brake (3) being associated with the leash in the region of the brake and comprising operating means (6) which are disposed spaced from a brake (3) activation device, **characterized in that** the operating means (6) are arranged in at least two areas of the housing accessible by the guiding hand, the desired function of the permanent stop-switch being achievable by the selective operation of only one of the operating means (6).

2. Animal leash according to claim 1, **characterized in that** the operating means (6) are formed as pivot levers (7), which are disposed opposite one another and interactively connected together by a shaft (8) passing through the housing (2).

3. Animal leash according to claim 1, **characterized in that** the shaft (8) is functionally associated with the brake (3), whereby after operation of the brake (3) the latter can be positively locked by the shaft (7) after corresponding action on one of the pivot levers (7).

4. Animal leash according to claim 3, **characterized in that** the positive locking of brake (3) and shaft (7) is effected by a pivotal or rotational movement of the shaft (8), whereby a recess (9), which is provided in the shaft (8) to allow the passage of a peg (17) of the brake (3), moves out of the region of the peg (17) and the shaft (8) locks the peg (17).

5. Animal leash according to one of claims 2 to 4, **characterized in that** a first pivot lever (7) is a component of the shaft (8), while the second pivot lever (7) can be connected to the free end of the shaft (8).

6. Animal leash according to claim 6, **characterized in that** the connection between the free end of the shaft (8) and the second pivot lever (7) is formed as a snap connection.

7. Animal leash according to one of claims 2 to 6, **characterized in that** the shaft (8) comprises a spring element (13) which holds the permanent stop-switch (5) in the respective end position.

8. Animal leash according to claim 1, **characterized in that** the operating means (5) of the permanent stop-switch are formed as a rocker switches (14), whereby a projection-like element (16) of the rocker switches (14) engage positively with recesses (11) of the brake (3) to block the brake (3).

9. Animal leash according to claim 8, **characterized in that** the rocker switches (14) are associated with one another by means of positively interlocking elements.

10. Animal leash according to claim 8 or 9, **characterized in that** the rocking switches (14) are associated with one another by means of cog wheel segments.

## Revendications

1. Laisse déroulable et enroulable pour mener des animaux, dans laquelle la laisse (10) est disposée dans un boîtier (2), pouvant être porté et guidé par une main, boîtier qui comporte un frein (3), manoeuvrable par cette même main, pour stopper à une longueur souhaitée quelconque le tronçon de laisse se trouvant à l'extérieur du boîtier, un interrupteur d'arrêt permanent (5), destiné à bloquer la laisse dans la position momentanément définie par le frein (3), étant affecté à la laisse (10) dans la zone du frein, et l'interrupteur d'arrêt permanent (5) comportant des organes de manoeuvre (6), disposés séparément d'un dispositif d'actionnement (4) du frein (3), caractérisée en ce que les organes de manoeuvre (6) sont disposés contre au moins deux zones du boîtier (2), zones se trouvant dans la zone d'accessibilité de la main menant le boîtier (2), auquel cas, grâce à l'actionnement, au choix, d'un seul des organes de manoeuvre (6), on peut atteindre la fonction souhaitée de l'interrupteur d'arrêt permanent (5).

2. Laisse pour animaux selon la revendication 1, caractérisée en ce que les organes de manoeuvre (6) sont conçus comme des leviers pivotants (7), opposés l'un à l'autre, et interagissant par l'intermédiaire d'un arbre traversant le boîtier (2).

3. Laisse pour animaux selon la revendication 1 ou 2, caractérisée en ce que l'arbre (8) interagit avec le frein (3), auquel cas, après actionnement du frein (3), ce dernier peut, après action correspondante sur l'un des leviers pivotants (7), être verrouillé par une liaison avec correspondance de forme par l'arbre (8).

4. Laisse pour animaux selon la revendication 3, caractérisée en ce que le verrouillage par liaison avec correspondance de forme du frein (3) et de l'arbre (8) s'effectue par un mouvement de pivotement ou de rotation de l'arbre (8), auquel cas un évidement (9) de l'arbre (8), prévu pour faire passer un bouton (17) du frein (3), arrive de la zone du bouton (17), et l'arbre (8) verrouille le bouton (17).

5. Laisse pour animaux selon l'une des revendications 2 à 4, caractérisée en ce qu'un premier levier pivotant (7) est un élément constituant de l'arbre (8), tandis que le deuxième levier pivotant (7) peut être relié à l'extrémité libre de l'arbre (8).

6. Laisse pour animaux selon la revendication 6, caractérisée en ce que la liaison entre l'extrémité libre de l'arbre (8) et le deuxième levier pivotant (7) est conçue comme un encliquetage.

7. Laisse pour animaux selon l'une des revendications 2 à 6, caractérisée en ce que l'arbre (8) comporte un élément à ressort (13), qui maintient l'interrupteur d'arrêt permanent (5) dans la position finale considérée.

8. Laisse pour animaux selon la revendication 1, caractérisée en ce que les organes de manoeuvre (6) de l'interrupteur d'arrêt permanent (5) sont conçus comme des interrupteurs à bascule (14), auquel cas, pour bloquer les freins (3), des éléments (16) en forme d'ergot des interrupteurs à bascule (14) entrent en prise, avec correspondance de forme, dans des évidements (11) aménagés dans le frein (3).

9. Laisse pour animaux selon la revendication 8, caractérisée en ce que les interrupteurs à bascule (14) interagissentl'un sur l'autre par l'intermédiaire d'éléments pouvant entrer en prise l'un dans l'autre par une liaison avec correspondance de forme.

10. Laisse pour animaux selon la revendication 8 ou 9, caractérisée en ce que les interrupteurs à bascule (14) interagissent l'un sur l'autre par l'intermédiaire de segments de roue dentée (15).
